(19) Europäisches Patentamt
European Patent Office
Office européen des brevets

(11) Veröffentlichungsnummer: **0 097 289**
**B1**

(12) **EUROPÄISCHE PATENTSCHRIFT**

(45) Veröffentlichungstag der Patentschrift: **15.10.86**

(21) Anmeldenummer: **83105681.7**

(22) Anmeldetag: **10.06.83**

(51) Int. Cl.⁴: **C 09 B 29/30**, C 09 B 31/08, C 09 B 45/00, C 09 B 43/14, C 09 B 33/02, C 09 B 62/006, C 07 C 143/64, C 07 C 143/55, C 07 D 239/42, C 07 D 251/44, C 09 B 29/30

(54) **Azofarbstoffe.**

(30) Priorität: **22.06.82 DE 3223257**
**22.06.82 DE 3223255**

(43) Veröffentlichungstag der Anmeldung:
**04.01.84 Patentblatt 84/1**

(45) Bekanntmachung des Hinweises auf die Patenterteilung:
**15.10.86 Patentblatt 86/42**

(84) Benannte Vertragsstaaten:
**CH DE FR GB LI**

(56) Entgegenhaltungen:
**CS-A-155 758**
**FR-A-1 211 135**
**FR-A-1 221 621**
**FR-A-1 257 386**
**FR-A-1 257 986**
**FR-A-2 438 673**
**FR-E-75 771**
**FR-E-88 875**
**US-A-2 347 042**

**HELV. CHIM. ACTA, Band 65, Nr. 2, 17. März 1982, Seiten 546-550, Schweizerische Chemische Gesellschaft, Basel CH, A. COURTIN: "Zur Synthese sulfonierter Derivate von 4-Fluoranilin"**

**Die Akte enthält technische Angaben, die nach dem Eingang der Anmeldung eingereicht wurden**

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl- Rumpff- Strasse 37, D-5090 Leverkusen 1 (DE)**
Erfinder: **Klauke, Erich, Dr., Eichendorffweg 8, D-5068 Odenthal (DE)**

(56) Entgegenhaltungen: (Fortsetzung)
**und die nicht in dieser Patentschrift enthalten sind.**

**EP 0 097 289 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Aus der FR-E-75 771 und der FR-A-1 221 621 sind Diazoreaktivfarbstoffe bekannt. Die in der FR-E-88 875 beschriebenen Farbstoffe weisen in der Diazokomponente in o-Stellung zur Azobrücke eine OH-Gruppe auf; außerdem ist der Reaktivrest in der 6-Stellung (bzw. 2-Stellung) an den Naphthalinkern über ein Brückenglied der Formel

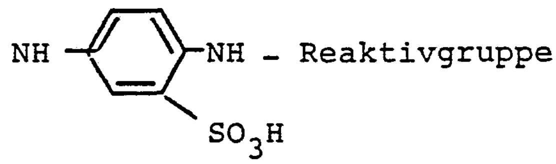

Reaktivgruppe
gebunden. Aus der US-A-2 873 269 ist ein Reaktivfarbstoff der Formel

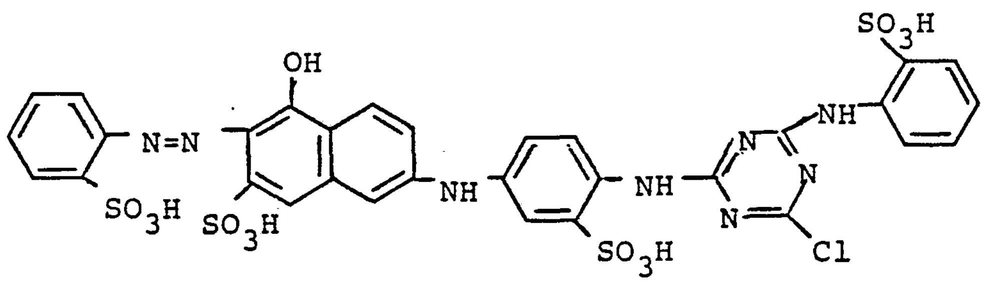

bekannt.
Gegenstand der Erfindung sind Farbstoffe der Formel

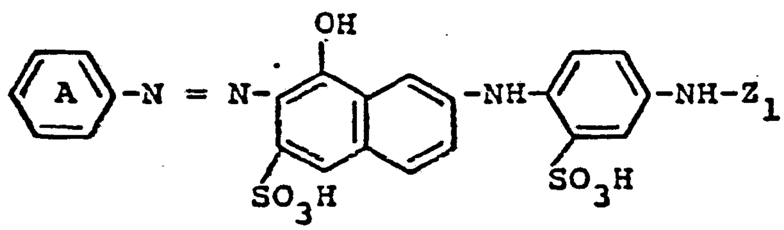

(1a)

und

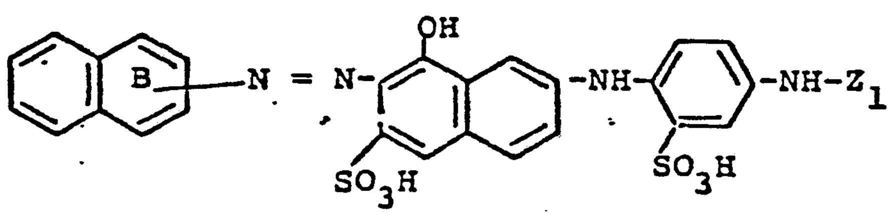

(1b)

worin
$Z_1$ = faserreaktiver Rest und Benzolring A und der Naphthalinring B noch durch $C_1$-$C_4$-Alkyl, $C_1$-$C_4$-Alkoxy, Nitro, Carboxy, Sulfo, $-SO_2CH=CH_2$ $-SO_2CH_2CH_2-OSO_3H$, Cl und NZ

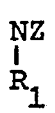

substituiert
sein kann, wobei $R_1$ = H oder $C_1$-$C_4$-Alkyl und Z ein faserreaktiver Rest oder ein nicht-faserreaktiver Carbonyl- oder Sulfonylrest ist und deren Verwendung zum Färben und Bedrucken von Hydroxylgruppen- oder

Amidgruppen-haltigen Materialien.

Bevorzugt sind daher Farbstoffe der Formeln (1), worin

$Z_1$ = Rest einer Reaktivkomponente der Fluorpyrimidin-, Monofluor- oder Monochlortriazinreihe oder der Dichlor-1,3,5-triazinylrest, sowie solche, die in den Ringen A und B Sulfogruppen enthalten.

Als Beispiele für nicht faserreaktive Carbonyl- oder Sulfonylreste seien erwähnt:

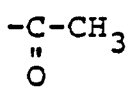 , 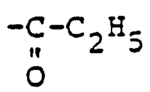 , 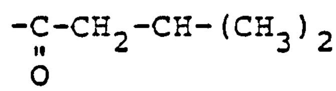 , 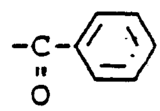 ,

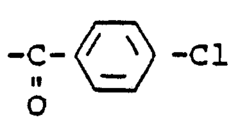 , 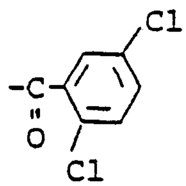 , 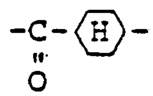 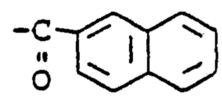 ,

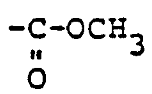 , 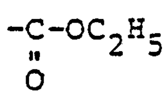 , 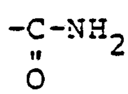 , 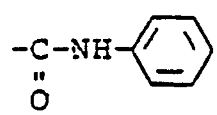 , $-SO_2CH_3$,

$-SO_2CH_3$, 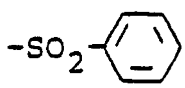 , 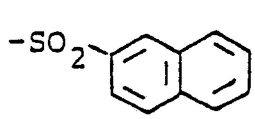

Unter faserreaktiven Resten Z bzw. $Z_1$ werden solche verstanden, die eine oder mehrere reaktive Gruppen oder abspaltbare Substituenten aufweisen, welche beim Aufbringen der Farbstoffe auf Cellulosematerialien in Gegenwart säurebindender Mittel und gegebenenfalls unter Einwirkung von Wärme mit den Hydroxylgruppen der Cellulose oder beim Aufbringen auf Superpolyamidfasern, wie Wolle, mit den NH-Gruppen dieser Fasern unter Ausbildung kovalenter Bindungen zu reagieren vermögen. Derartige faserreaktive Gruppierungen sind aus der Literatur in großer Zahl bekannt.

Für die erfindungsgemäßen Farbstoffe geeignete Reaktivgruppen, welche mindestens einen abspaltbaren Substituenten an einen heterocyclischen oder an einen aliphatischen Rest gebunden enthalten, sind unter anderem solche, die mindestens einen reaktiven Substituenten an einen 5- oder 6-gliedrigen heterocyclischen Ring gebunden enthalten, wie an einen Monoazin-, Diazin-, Triazin-, z.B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalinzin-, Chinazolin-, Chinoxalin-, Acridin-, Phenazin- und Phenanthridin-Ring-System; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen:

Halogen (Cl, Br oder F), Ammonium, einschließlich Hydrazinium, Sulfonium, Sulfonyl, Azido-($N_3$), Rhodanido, Thio, Thiolether, Oxiether, Sulfinsäure und Sulfonsäure. Im einzelnen sind beispielsweise zu nennen:

Mono- oder Dihalogen-symmetrische-triazinylreste, z.B. 2,4-Dichlortriazinyl-6-, 2-Amino-4-chlortriazinyl-6-, 2-Alkylamino-4-chlortriazinyl-6-, wie 2-Methylamino-4-chlortriazinyl-6-, 2-Ethylamino- oder 2-Propylamino-4-chlortriazinyl-6-, 2-*B-Oxethylamino-4-chlortriazinyl-6-, 2-Di-*B-oxethylamino-4-chlortriazinyl-6- und die entsprechenden Schwefelsäurehalbester, 2-Diethylamino-4-chlortriazinyl-6-, 2-Morpholino- oder 2-Piperidino-4-chlortriazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxyl- oder Sulfophenyl)-amino-4-chlortriazinyl-6-, 2-Alkoxy-4-chlortriazinyl-6-, wie 2-Methoxy- oder Ethoxy-4-chlortriazinyl-6-, 2-(Phenylsulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxi-4-chlortriazinyl-6-, 2-(o-, m- oder p-Methyl- oder Methoxyphenyl)-oxi-4-chlor-triazinyl-6-, 2-Alkylmercapto- oder 2-Arylmercapto- oder 2-(substituiertes Aryl)-mercapto-4-chlortriazinyl-6-, wie 2-*B-Hydroxyethylmercapto-4-chlortriazinyl-6-, 2-Phenylmercapto-4-chlortriazinyl-6-, 3-(4'-Methylphenyl)-mercapto-4-chlortriazinyl-6-, 2-(2',4'-Dinitro)-phenylmercapto-4-chlortriazinyl-6-, 2-Methyl-4-chlor-triazinyl-6-, 2-Phenyl-4-chlor-triazinyl-6-, 2,4-Difluortriazinyl-6-, Monofluortriazinylreste, die durch Amino-, Alkylamino-, Aralkylamino-, Acylaminogruppen substituiert sind, wobei Alkyl, insbesondere gegebenenfalls substituiertes $C_1$-$C_4$-Alkyl, Aralkyl, insbesondere gegebenenfalls substituiertes Phenyl-$C_1$-$C_4$-Alkyl und Aryl, insbesondere gegebenenfalls durch Sulfo-, Alkyl-, insbesondere $C_1$-$C_4$-Alkyl-, Alkoxy-, insbesondere $C_1$-$C_4$-Alkoxy-, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6-, 2-Methylamino-4-fluor-triazinyl-6-, 2-Ethylamino-4-fluor-triazinyl-6-, 2-iso-Propylamino-4-fluor-triazinyl-6-, 2-Dimethylamino-4-fluor-triazinyl-6, 2-Diethylamino-4-fluor-triazinyl-6, 2-*B-Methoxy-ethylamino-4-fluor-triazinyl-6, 2-*B-Hydroxyethylamino-4-fluor-triazinyl-6, 2-Di-(*B-hydroxyethylamino)-4-fluortriazinyl-6, 2-*B-Sulfoethylamino-4-fluor-triazinyl-6, 2-*B-Sulfo-ethyl-methylamino-4-fluor-triazinyl-6, 2-Carboxymethyl-amino-4-fluor-triazinyl-6, 2-*B-Cyanethylamino-4-fluor-triazinyl-6, 2-Benzylamino-4-fluor-triazinyl-6, 2-*B-Phenyl-ethylamino-4-fluor-triazinyl-6, 2-Benzyl-methylamino-4-fluor-triazinyl-6, 2-(x-Sulfo-benzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluor-triazinyl-6, 2-(2'-Methyl-5'-sulfonylphenyl)-amino-4-fluor-triazinyl-6, 2-(2'-Methyl-5'-sulfonyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2', 4'-Disulfophenyl)-amino-4-fluor-triazinyl-6, 2-(3',5'-Disulfophenyl) -amino-4-fluor-triazinyl-6, 2-(2'-Carboxy-4-sulfophenyl) -amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-*B-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-piperidino-4-fluor-triazinyl-6, 2-(4',6',8'-Trisulfonaphthyl-(2'))-4-fluor-triazinyl-6, 2-(3',6',8'-Trisulfonaphthyl-(2'))-4-fluor-triazinyl-6, 2-(3',6'-Disulfonaphthyl-(1'))-4-fluor-triazinyl-6, Mono-, Di- oder Trihalogenpyrimidinylreste, wie 2,4-Dichlorpyrimidinyl-6-, 2,4, 5-Trichlorpyrimidinyl-6-, 2,4-Dichlor-5-nitro- oder -5-methyl-oder -5-carboxymethyl- oder -5-carboxy- oder -5-cyano-oder -5-vinyl- oder -5-sulfo- oder -5-mono-, -di- oder -trichlormethyl- oder -5-carboalkoxy-pyrimidinyl-6-, 2,6-Dichlorpyridin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluor-pyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Monochlorchinoxalin-6-carbonyl-, 2- oder 3-Monochlorchinoxalin-6-sulfonyl-, 2,3-Dichlor-chinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4'-5'-Dichlorpyridazon-6'-yl-1')-phenylsulfonyl- oder -carbonyl-, *B-(4',5'-Dichlorpyridazon-6'-yl-1')-ethylcarbonyl-, N-Methyl-N-(2,4-Dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- oder N-Ethyl-N-(2,4-dichlortriazinyl-6)-amino-acetyl-, N-Methyl-N-(2,3-dichlorchinoxalin-6-sulfonyl)-aminoacetyl-, N-Methyl-N-(2,3-dichlorchinoxalin-6 -carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimi-dinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-Chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl -4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl -4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfo-phenyl)-sulfonyl-4-chlortriazinyl-6-, 2,4-Bis-(3'-carboxyphenylsulfonyl)-triazinyl-6; sulfonylgruppenhaltige Pyrimidinringen, wie 2-Carboxymethylsulfonylpyrimidinyl -4-, 2-Methylsulfonyl-6-methyl-pyrimidinyl-4-, 2-Me-thylsulfonyl-6-ethyl-pyrimidinyl-4-, 2-Phenylsulfonyl-5-chlor-6-methyl-pyrimidinyl-, 2,6-Bis-methylsulfonyl-pyrimidinyl-5-, 2,6-Bis-methylsulfonyl-5-chlor-pyrimidinyl -4-, 2,4-Bis-methylsulfonyl-pyrimidin-5-sulfonyl-, 2-Methylsulfonyl-pyrimidinyl-4, 2-Phenylsulfonyl-pyrimidinyl -4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methyl-sulfonyl-5-chlor-6-chlormethyl-pyrimidinyl-4-, 2-Methyl-sulfonyl-4-chlor-6-methylpyrimidin-5-sulfonyl-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methyl-sulfonyl-6-chlor-pyrimidinyl-4-, 2,6-Bis-methylsulfonyl-5-chlor-pyrimidinyl-4-, 2-Methylsulfonyl-6-carboxy-pyrimidinyl-4-, 2-Methylsulfonyl -5-sulfo-pyrimidinyl-4-, 2-Methylsulfonyl-6-carbo-methoxy-pyrimidinyl-4-, 2-Methylsulfonyl-5-carboxy-pyrimidinyl -4-, 2-Methylsulfonyl-5-cyan-6-methoxy-pyrimidinyl -4-, 2-Methylsulfonyl-5-chlorpyrimidinyl-4-, 2-Sulfoethylsulfonyl-6-methyl-pyrimidinyl-4-, 2-Methyl-sulfonyl-5-brom-pyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyri-midin-4- und -5-carbonyl-, 2,6-Bis-(methyl-sulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl -pyrimidin-5-sulfonyl- oder -carbonyl-; ammoniumgruppenhaltige Triazinringe, wie Trimethylammonium-4-phenylamino- oder -4-(o-, m- oder p-sulfophenyl)-amino-triazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium-4-phenylamino- oder -4-(o-, m- oder p-sulfophenyl)-amino-triazinyl-6-, 2-N-Aminopyrrolidinium- oder 2-N-Amino-piperidinium-4-phenylamino- oder -4-(o-, m- oder p-sulfophenyl) -aminotriazinyl-6-, 2-N-Aminopyrrolidinium- oder 2-N-Aminopiperidinium-4-phenylamino- oder -4-(o-, m- oder p-sulfophenyl)-aminotriazinyl-6-, ferner 4-Phe-nylamino- oder 4-(sulfophenylamino)-triazinyl-6-Reste, die in 2-Stellung über eine Stickstoffbindung das 1,4-Bis-aza-bicyclo-[2,2,2]-octan oder das 1,2-Bis-aza-bicyc-lo-[0,3,3]-octan quartär gebunden enthalten, 2-Pyridinium -4-phenylamino- oder -4-(o-, m- oder p-sulfophenyl)-aminotriazinyl-6- sowie entsprechende 2-Oniumtriazinyl-6-Reste, die in 4-Stellung durch Alkylamino-, wie Methylamino-, Ethylamino- oder •B-Hydroxyethylamino- oder Alkoxy-, wie Methoxy- oder Aroxy-, wie Phenoxy- oder Sulfophenoxy-Gruppen substituiert sind; 2-Chlorbenzthiazol -5- oder 6-carbonyl- oder -5- oder -6-sulfonyl-, 2-Arylsulfonyl- oder -Alkylsulfonylbenzthiazol-5-oder -6-carbonyl- oder -5- oder -6-sulfonyl-, wie 2-Methyl-sulfonyl- oder 2-Ethylsulfonylbenzthiazol-5- oder -6-sulfonyl- oder -carbonyl-, 2-Phenylsulfonyl-benzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5-oder -6-carbonyl- oder -sulfonyl-, 2-Chlorbenzimidazol -5- oder -6-carbonyl- oder -sulfonyl-, 2-Chlor-l-methylbenzimidazol-5- oder -6-carbonyl- oder -sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl oder auch die Reste 5-Chlor-2,6-difluor-1,3-dicyan-phenyl, 2,4-Difluor-1,3,5-tricyanphenyl, 2,4,5-Trifluor-1,3-dicyan-phenyl, 2,4-Dichlor-5-methylsulfonyl-pyrimidinyl-6, 2,4-Trichlor-5-ethylsulfonyl-pyrimidinyl-6, 2-Fluor-5-methylsulfonyl-6'-(2'-sulfophenylamino)-py-rimidinyl-4.

Desweiteren sind Reaktivgruppen der aliphatischen Reihe zu nennen, wie Acryloyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, •B-Chlorpropionyl-, 3-Phenylsulfonylpropionyl-, 3-Methylsulfonylpropionyl-, •B-Sulfato-ethylaminosulfonyl-, Vinylsulfonyl-, •B-Chlorethylsulfonyl-, •B-Sulfatoethylsulfonyl-, •B-Methylsulfonylethylsulfonyl-, •B-Phenylsulfonylethylsulfonyl-, 2-Fluor-2-chlor-3,3-difluorcyclobutan-1-carbonyl-, 2,2,3,3-Tetrafluorcyclobutan-carbonyl-1- oder -sulfonyl-1-, •B-(2,2,3,3-Tetrafluorcyclobutyl-1)-acryloxy-, •A- oder •B-Bromacryloyl-, CC,- oder •B-Alkyl- oder Arylsulfoacryloyl-Gruppe, wie •A- oder •B-Methylsulfonylacryloyl.

Das zur Herstellung der erfindungsgemäßen Farbstoffe verwendete Zwischenprodukt der Formel

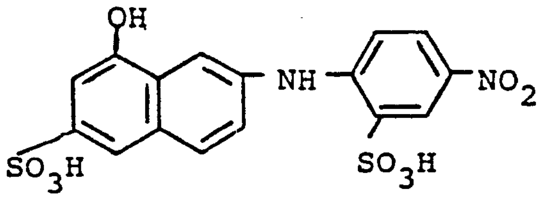

(2a)

wird hergestellt, indem man

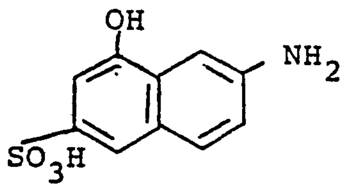

(2b)

mit

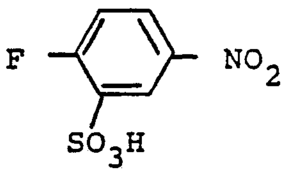

(2c)

kondensiert.

Diese Kondensation erfolgt im allgemeinen in wäßriger Phase bei Temperaturen zwischen 60 und 120°C, bevorzugt zwischen 80 und 100°C, wobei der bei der Kondensation freiwerdende Fluorwasserstoff zweckmäßigerweise durch Zusatz von Basen wie z.B. LiOH, $Li_2CO_3$, NaOH, $NaHCO_3$, $Na_2CO_3$, KOH, $K_2CO_3$, CaO, $Ca(OH)_2$, $CaCO_3$, MgO, $MgCO_3$, $K_2HPO_4$, $K_3HPO_4$, $K_3PO_4$, $Na_2HPO_4$, $Na_3PO_4$, $Na(CH_3(COO)$, $K(CH_3COO)$ gebunden wird.

Pro Mol Ausgangsverbindung der Formel (2b) werden 1 bis 1,1 Mol und vorzugsweise 1 Mol der Komponente (2c) eingesetzt.

Die 2-Fluor-5-nitrobenzolsulfonsäure der Formel (2c) wird hergestellt, indem man 4-Fluornitrobenzol mit Oleum bei erhöhter Temperatur vorzugsweise bei 60-120°C, insbesondere bei 60-100°C, behandelt. Hierbei werden pro Mol 4-Fluornitrobenzol 1 bis 1,6 Mol $SO_3$, insbesondere 1,2 bis 1,4 Mol $SO_3$, eingesetzt.

Die neuen Farbstoffe erhält man beispielsweise nach folgendem Reaktionsschema durch Kupplung in schwach saurem bis schwach alkalischem Medium:

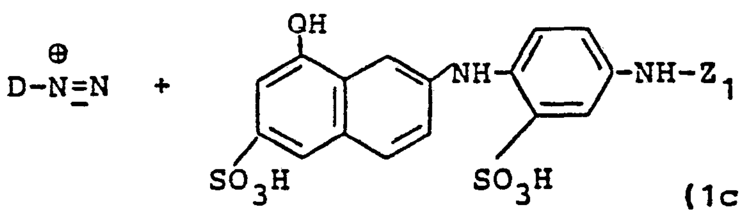

(1c)

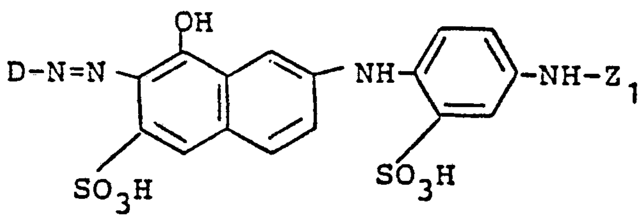

(1)

worin

D = 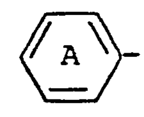 oder 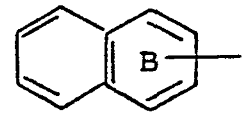

Die erfindungsgemäßen Farbstoffe können auch durch Acylierung der entsprechenden aminogruppenhaltigen Azofarbstoffe erhalten werden.

Als Acylierungsmittel kommen im allgemeinen die Halogenide, insbesondere die Fluoride und Chloride der Reaktivkomponenten sowie der nichtreaktiven Carbonyl- und Sulfonylverbindungen in Frage. Aus der großen Zahl der zur Verfügung stehenden Verbindungen seien hier auszugsweise erwähnt:

1) nicht reaktive Carbonyl- oder Sulfonylkomponenten,

Acetylchlorid, Propionylchlorid, Isovaleroylchlorid, Benzoylchlorid, 4-Chlorbenzoylchlorid, 2,5-Dichlorbenzoylchlorid, Cyclohexancarbonsäurechlorid, *B-Naphtoylchlorid, Diphenylcarbonsäurechlorid, Phenylessigsäurechlorid, Chlorameisensäuremethylester, Chlorameisensäureethylester, Chlorameisensäureisopropylester, Methylisocyanat, Phenylisocyanat, Methansulfonsäurechlorid, Benzolsulfonsäurechlorid, *B-Naphthalinsulfonsäurechlorid, Phosgen.

2) Reaktivkomponenten

Trihalogen-symmetrische-triazine, wie Cyanurchlorid und Cyanurbromid, dihalogen-monoamino- und monosubstituierte aminosymmetrische Triazine, wie 2,6-Dichlor -4-aminotriazin, 2,6-Dichlor-4-methylaminotriazin, 2,6-Dichlor-4-ethylaminotriazin, 2,6-Dichlor-4-oxethylaminotriazin, 2,6-Dichlor-4-phenylaminotriazin, 2,6-Dichlor-4-(o-, m- oder p-sulfophenyl) -aminotriazin, 2,6-Dichlor-4-(2',3'-, 2',4-, 3',4'-oder -3',5'-disulfophenyl)-aminotriazin, Dihalogenalkoxy- und -aryloxy-sym.triazine, wie 2,6-Dichlor-4-methoxytriazin, 2,6-Dichlor-4-ethoxytriazin, 2,6-Dichlor-4-phenoxytriazin, 2,6-Dichlor-4-(o-, m- oder p-sulfophenyl)-oxitriazin, Dihalogen-alkylmercapto- und -arylmercapto sym.-triazine, wie 2,6-Dichlor-4-ethylmercapto-triazin, 2,6-Dichlor-4-phenylmercapto-triazin, 2,6-Dichlor-4-(p-methylphenyl)-mercaptotriazin, 2,4,6-Trifluortriazin, 2,4-Difluor-6-(o-, m-, p-methyl-phenyl)-amino-triazin, 2,4-Difluor-6-(o-, m-, p-sulfophenyl)-amino-triazin, 2,4-Difluor-6-methoxy-triazin, 2,4-Difluor-6-(2',5'-disulfophenyl)-amino-triazin, 2,4-Difluor-6-(6'-sulfonaphthyl-2')-amino-triazin, 2,4-Difluor-6-(o-, m-, p-ethylphenyl)amino-triazin, 2,4-Difluor-6-(o-, m-, p-chlorphenyl)amino-triazin, 2,4-Difluor-6-(o-, m-, p-methoxyphenyl)amino-triazin, 2,4-Difluor-6-(2'-methyl-5'-sulfophenyl)-amino-triazin, 2,4-Difluor-6-(2'-methyl-4'-sulfophenyl)-amino-triazin, 2,4-Difluor-6-(2'-chlor-4'-sulfophenyl)-amino-triazin, 2,4-Difluor-6-(2'-chlor-5'-sulfophenyl)-amino-triazin, 2,4-Difluor-6-2'-methoxy-4'-sulfophenyl)-amino-triazin, 2,4-Difluor-6-(o-, m-, p-carboxyphenyl)-amino-triazin, 2,4-Difluor -6-(N-methyl-phenyl)-amino-triazin, 2,4-Difluor-6-(N-ethyl-phenyl)-amino-triazin, 2,4-Difluor-6-(N-isopropyl-phenyl)-amino-triazin, 2,4-Difluor-6-cyclohexylamino-triazin, 2,4-Difluor-6-morpholino-tri-azin, 2,4-Difluor-6-piperidino-triazin, 2,4-Difluor-6-benzylamino-triazin, 2,4-Difluor-6-N-methyl-benzyl-amino-triazin, 2,4-Difluor-6-*B-phenylethyl-amino-triazin, 2,4-Difluor-6-(x-sulfo-benzyl)-amino-triazin, 2,4-Difluor-6-(2'-4'-disulfophenyl)-amino-triazin, 2,4-Difluor-6-(3',5'-disulfophenyl)-amino-triazin, 2,4-Difluor-6-(2'-carboxy-4'-sulfo-phenyl)-amino-tri-azin, 2,4-difluor-6-(2', 5'-disulfo-4-methoxyphenyl)-amino-triazin, 2,4-difluor-(2'-methyl-4',6'-disulfo-phenyl)-amino-triazin, 2,4-Difluor-(6',8'-disulfonaphthyl -(2'))-amino-triazin, 2,4-Difluor-(4',8'-disulfo-naphthyl-(2'))-amino-triazin, 2,4-Difluor-(4',6',8'-trisulfo-naphthyl-(2'))-amino-triazin, 2,4-Difluor-(3',6',8'-trisulfonaphthyl-(2'))-amino-triazin, 2,4-Difluor-(3',6'-disulfonaphthyl-(1'))-amino-triazin, 2,4-Difluor-6-amino-triazin, 2,4-difluor-6-methylamino-triazin, 2,4-Difluor-6-ethylamino-triazin, 2,4-Di-fluor-6-methoxyethoxy-triazin, 2,4-Difluor-6-methoxy-ethylamino-triazin, 2,4-Difluor-6-dimethylamino-tri-azin, 2,4-Difluor-6-diethylamino-triazin, 2,4-Difluor-6-iso-propylamino-triazin, Tetrahalogenpyrimidine, wie Tetrachlor-, Tetrabrom- oder Tetrafluor-pyrimidin, 2,4,6-Trihalogenpyrimidine, wie 2,4,6-Trichlor-, -Tribrom- oder -Trifluor-pyrimidin, Dihalogenpyrimidine, wie 2,4-Dichlor-, -Dibrom- oder -Difluorpyrimidin, 2,4,6-Trichlor-5-nitro- oder -5-methyl- oder -5-carbo-methoxy- oder -5-carboethoxy- oder -5-carboxymethyl-oder -5-mono-, -di- oder -trichlormethyl- oder -5-carb-oxy- oder -5-sulfo- oder -5-cyano- oder -5-vinyl-pyri-midin, 2,4-Difluor-6-methylpyrimidin, 2,6-Difluor-4-methyl-5-chlorpyrimidin, 2,4-Difluor-pyrimidin-5-ethylsulfon, 2,6-Difluor-4-chlorpyrimidin, 2,4,6-Trifluor -5-chlorpyrimidin, 2,6-Difluor-4-methyl-5-brom-pyrimidin, 2,4-Difluor-5,6-dichlor- oder -dibrompyrimidin, 3,6-Difluor-2,5-dichlor- oder -dibrompyrimidin, 2,6-Difluor-4-brompyrimidin, 2,4,6-Trifluor-5-brompy-rimidin, 2,4,6-Trifluor-5-chlormethylpyrimidin, 2,4,6-Trifluor-5-nitropyrimidin, 2,4,6-Trihalogen-5 -carbonsäurealkylester oder -5-carbonsäureamide, 2,6-Difluor-5-methyl-4-chlorpyrimidin, 2,6-Difluor-5-chlorpyrimidin, 2,4,6-Trifluor-5-methylpyrimidin, 2,4,5-Trichlor-6-methylpyrimidin, 2,4-Difluor-5-nitro-6-chlorpyrimidin, 2,4-Difluor-5-cyanpyrimidin, 2,4-Difluor-5-methylpyrimidin, 6-Trifluormethyl-5-chlor-2,4-difluorpyrimidin, 6-Phenyl -2,4-difluorpyrimidin, 6-Trifluormethyl-2,4-difluor-pyrimidin, 5-Trifluormethyl-2,4,6-trifluorpyrimidin, 2,4-Difluor-5-nitro-pyrimidin, 2,4-Difluor-5-trifluor-methylpyrimidin, 2,4-Difluor-5-methylsulfonyl-pyrimi-din, 2,4-Difluor-5-phenyl-pyrimidin, 2,4-difluor-5 -carbonamido-pyrimidin, 2,4-Difluor-5-carbomethoxy-pyrimidin, 2,4-Difluor-6-trifluormethylpyrimidin, 2,4 -Difluor-6-carbonamido-pyrimidin, 2,4-Difluor-6-carbometh-oxypyrimidin, 2,4-Difluor-6-phenyl-pyrimidin, 2,4-Difluor-6-carbonamido-pyrimidin, 2,4-Difluor-6-carbometh-oxypyrimidin, 2,4-Difluor-6-phenyl-pyrimidin, 2,4 -Difluor-6-cyanpyrimidin, 2,4,6-Trifluor-5-methylsulfonylpyrimidin, 2,4-Difluor-5-sulfonamido-pyrimidin, 2,4-Difluor-5-chlor-6-carbomethoxy-pyrimidin, 5-Trifluor-methyl-2,4-difluorpyrimidin,

2,4-Dichlorpyrimidin-5-carbonsäurechlorid, 2,4,6-Trichlorpyrimidin-5-carbon-säurechlorid, 2-Methyl-4-chlorpyrimidin-5-carbonsäure-chlorid, 2-Chlor-4-methylpyrimidin-5-carbonsäurechlo-rid, 2,6-Dichlorpyrimidin-4-carbonsäurechlorid; Pyrimidin-Reaktivkomponenten mit abspaltbaren Sulfonylgruppen, wie 2-Carboxymethylsulfonyl-4-chlorpyrimidin, 2-Methylsulfonyl-4-chlor-6-methyl-pyrimidin, 2,4-Bis methylsulfonyl-6-methylpyrimidin, 2,4-Bis-phenylsulfonyl -5-chlor-6-methylpyrimidin, 2,4,6-Trismethylsulfonyl -pyrimidin, 2,6-Bis-methylsulfonyl-4,5-dichlorpyri-midin, 2,4-Bis-methylsulfonylpyrimidin-5-sulfonsäure-chlorid, 2-Methylsulfonyl-4-chlorpyrimidin, 2,-Phenyl-sulfonyl-4-chlorpyrimidin, 2,4-Bis-trichlormethylsulfonyl -6-methylpyrimidin, 2,4-Bis-methylsulfonyl-5-chlor-6-methylpyrimidin, 2,4-Bis-methylsulfonyl-5-brom-6-methylpyrimidin, 2-Methylsulfonyl-4,5-dichlor-6-methylpyrimidin, 2-Methylsulfonyl-4,5-dichlor-6-chlormethylpyrimidin, 2-Methylsulfonyl-4-chlor-6-methylpyrimidin-5-sulfonsäurechlorid, 2-Methylsulfonyl-4-chlor-5-nitro-6-methylpyrimidin, 2,4,5,6 -Tetramethylsulfonyl-pyrimidin, 2-Methylsulfonyl-4-chlor-5,6-dimethylpyrimidin, 2-Ethylsulfonyl-4,5-dichlor-6-methylpyrimidin, 2-Methylsulfonyl-4,6-dichlorpyrimidin, 2,4,6-Tris-methylsulfonyl-5-chlor-Pyrimidin, 2-Methyl-sulfonyl-4-chlor-6-carboxypyrimidin, 2-Methylsulfonyl -4-chlorpyrimidin-5-sulfonsäure, 2-Methylsulfonyl-4-chlor-6-carbomethoxypyrimidin, 2-Methylsulfonyl-4-chlor-pyrimidin-5-carbonsäure, 2-Methylsulfonyl-4-chlor-5-cyan-6-methoxypyrimidin, 2-Methylsulfonyl-4,5-dichlorpyrimidin, 4,6-Bis-methylsulfonyl-pyrimi-din, 4-Methylsulfonyl-6-chlorpyrimidin, 2-Sulfoethyl-sulfonyl-4-chlor-6-methylpyrimidin, 2-Methylsulfonyl-4-chlor-5-brompyrimidin, 2-Methylsulfonyl-4-chlor-5-brom-6-methylpyrimidin, 2,4-Bis-methylsulfonyl-5-chlor-pyrimidin, 2-Phenylsulfonyl-4,5-dichlorpyrimidin, 2-Phenylsulfonyl-4,5-dichlor-6-methylpyrimidin, 2 -Carboxymethylsulfonyl-4,5-dichlor-6-methylpyrimidin, 2-(2'- oder 3'- oder 4'-Carboxyphenylsulfonyl)-4,5-dichlor-6-methylpyrimidin, 2,4-bis-(2'- oder 3'- oder 4'-Carboxyphenylsulfonyl)-5-chlor-6-methylpyrimidin, 2-Methylsulfonyl-6-chlorpyrimidin-4- oder -5-carbonsäurechlorid, 2-Ethylsulfonyl-6-chlorpyrimidin-4- oder -5-carbonsäurechlorid, 2,6-Bis-(methylsulfonyl)-pyri-midin-4-carbonsäurechlorid, 2-Methylsulfonyl-6-methyl-4-chlor- oder -4-brompyrimidin-5-carbonsäurechlorid oder -bromid, 2,6-Bis-(methylsulfonyl)-4-chlorpyrimidin -5-carbonsäurechlorid; weitere Reaktivkomponenten der heterocyclischen Reihe mit reaktiven Sulfonylsubstituenten sind beispielsweise 3,6-Bis-phenylsulfonyl-pyridazin, 3-Methylsulfonyl-6-chlorpyridazin, 3,6-Bis-trichlormethylsulfonylpyridazin, 3,6-Bis-methylsulfonyl -4-methylpyridazin, 2,5,6-Tris-methylsulfonylpyridazin, 2,4-Bis-methylsulfonyl-1,3,5-triazin, 2,4-Bis-methylsulfonyl-6-(3'-sulfophenylamino)-1,3,5-triazin, 2,4-Bis-methylsulfonyl-6-N-methylanilino-1,3,5-triazin, 2,4-Bis-methylsulfonyl-6-phenoxy-1,3,5-triazin, 2,4-Bis-methylsulfonyl-6-trichlorethoxy-1,3,5-triazin, 2,4,6-Tris-phenylsulfonyl-1,3,5-triazin, 2,4-Bis -methylsulfonylchinazolin, 2,4-Bis-trichlormethylsulfo-nylchinolin, 2,4-Bis-carboxymethylsulfonylchinolin, 2,6-Bis-(methylsulfonyl)-pyridin-4-carbonsäurechlorid und 1-(4'-Chlor-carbonylphenyl oder 2'-chlorcarbonyl-ethyl)-4,5-bis-methylsulfonyl-pyridazin-(6); weitere heterocyclische Reaktivkomponenten mit beweglichem Halogen sind unter anderem 2- oder 3-Monochlorchinoxalin-6-carbonsäurechlorid oder -6-sulfonsäurechlorid, 2-oder 3-Monobromchinoxalin-6-carbonsäurebromid oder -6-sulfonsäurebromid, 2,3-Dichlorchinoxalin-6-carbon-säurechlorid oder -6-sulfonsäurechlorid, 2,4 -Dibromchinoxalin-6-carbonsäurebromid oder -6-sulfonsäurebromid, 1,4-Dichlorphthalazin-6-carbonsäurechlorid oder -6-sulfonsäurechlorid sowie die entsprechenden Bromverbindungen, 2,4-Dichlorchinazolin-6- oder -7-carbon-säurechlorid oder -7-sulfonsäurechlorid sowie die entsprechenden Bromverbindungen, 2- oder 3- oder 4-(4',5'-Dichlorpyridazon-6'-yl-1')-phenylsulfonsäure-chlorid oder -carbonsäurechlorid sowie die entsprechenden Bromverbindungen, *B-(4',5'-Dichlorpyridazon-6'-yl-1')-ethylcarbonsäurechlorid, 2-Chlorchinoxalin-3 -carbonsäurechlorid und die entsprechende Bromverbindung, N-Methyl-N-(2,5-dichlortriazinyl-6)-carbamidsäurechlorid, N-Methyl-N-(2-chlor-4-methylamino-triazinyl-6)-carbamidsäurechlorid, N-Methyl-N-(2-chlor-4-dimethyl-amino-triazinyl-6)-carbamidsäurechlorid, N-Methyl- oder N-Ethyl-N-(2,4-dichlortriazinyl-(6)-aminoacetylchlorid, N-Methyl-, N-Ethyl- oder N-Hydroxyethyl-N-(2,3-dichlorchinoxalin-6-sulfonyl- oder -6-carbonyl)-aminoacetylchlorid und die entsprechenden Bromderivate, ferner 2-Chlorbenzthiazol-5- oder -6-carbonsäurechlorid oder -5- oder -6-sulfonsäurechlorid und die entsprechenden Bromverbindungen, 2-Arylsulfonyl- oder 2-Alkylsulfonyl-benzthiazol-5- oder -6-carbonsäurechlo-rid oder -5- oder -6-sulfonsäurechlorid, wie 2-Methyl-sulfonyl- oder 2-Ethyl-sulfonyl- oder 2-Phenylsulfonyl -benzthiazol-5- oder -6-sulfonsäurechlorid oder -5-oder -6-carbonsäurechlorid sowie die entsprechenden in ankondensierten Benzolring Sulfonsäuregruppen enthaltenden 2-Sulfonylbenzthiazol-Derivate, 3,5-Bis-methyl-sulfonyl-isothiazol-4-carbonsäurechlorid, 2-Chlor -benzoxazol-5- oder -6-carbonsäurechlorid oder -sulfonsäurechlorid sowie die entsprechenden Bromderivate, 2-Chlorbenzimidazol-5- oder -6-carbonsäurechlorid oder -sulfonsäurechlorid sowie die entsprechenden Bromderivate, 2-Chlor-1-methylbenzimidazol-5- oder -6-carbon-säurechlorid oder -sulfonsäurechlorid sowie die entsprechenden Bromderivate, 2-Chlor-4-methylthiazol-(1,3)-5-carbonsäurechlorid oder -4- oder -5-sulfonsäurechlorid, 2-Chlorthiazol-4- oder -5-sulfonsäurechlorid und die entsprechenden Bromderivate. Weiterhin seien genannt: 5-Chlor-2,4,6-trifluor-isophthalonitril, 2,4,6-Trifluor-1,3,5-tricyanobenzol, 2,4,5,6-Tetrafluorisophthalonitril, 2,4,6-Trichlor-5-methylsulfonyl-pyrimidin, 2,4,6-Trichlor-5-ethylsulfonyl-pyrimidin, 2,4-Difluor-5-methylsulfonyl-6-(2'-sulfophenylamino)-pyrimidin.

Aus der Reihe der aliphatischen Reaktivkomponenten sind beispielsweise zu erwähnen: Acrylsäurechlorid, Mono-, Di- oder Trichlor-acrylsäurechlorid, 3-Chlorpropionsäurechlorid, 3-Phenylsulfonylpropionsäurechlorid, 3-Methylsulfonyl-propionsäure-chlorid, 3-Ethyl-sulfonylpropionsäurechlorid, 3-Chlorethansulfochlorid, Chlormethansulfochlorid, 2-Chlor-acetylchlorid, 2,2,3,3-Tetrafluorcyclobutan-1-carbon-säurechlorid, *B-(2,2,3,3-Tetrafluorcyclobutyl-1)-acryl-säurechlorid, *B-(2,2,3,3-Trifluor-2-chlorcyclobutan-1)-carbonsäurechlorid, *B-Methylsulfonyl-acrylsäurechlorid, *A-Methylsulfonyl-acrylsäurechlorid und *A-Bromacetylsäurechlorid und *B-Bromacrylsäurechlorid.

Den Farbstoffen der Formel (1) liegen Amine der Formel D-$NH_2$ als Diazokomponenten zugrunde. Beispielhaft seien genannt:

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobenzol-2-, -3- oder -4-carbonsäure, 1-Amino-3- oder -4-nitrobenzol, 1-Amino-3- oder -4-acetylaminobenzol, 1-Amino-benzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methyl-benzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4 -dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxy-benzol-3- oder -4-sulfonsäure, 1-Amino-6-ethoxybenzol-3- und -4-sulfonsäure, 1-Amino-2,4-dimethoxybenzol-6-sulfonsäure, 1-Amino-2,5-dimethxybenzol-4-sulfonsäure, 2-Amino-1-benzol-3,5-disulfonsäure, 1-Amino-4-methoxy-benzol-2,5-disulfonsäure, 1,4-Diaminobenzol-2,5 -disulfonsäure, 1-Amino-3- oder -4-nitrobenzol-6-sulfonsäure, 1-Aminonaphthalin, 2-Aminonaphthalin, 1-Aminonaphthalin -2-, -4-, -5-, -6-, -7- oder -8-sulfonsäure, 2-Aminonaphthalin-3,6- oder -5,7-disulfonsäure, 1-Aminonaphthalin-3,6- oder -5,7-disulfonsäure, 2 -Aminonaphthalin-1,5-, -1,7-, -3,6-, -5,7-, -4,8- oder -6,8 -disulfonsäure, 1-Aminonaphthalin-2,5,7-trisulfonsäure, 2-Aminonaphthalin-1,5,7-, -3,6,8- oder -4,6,8-tri-sulfonsäure.

Als o-Carboxyaminobenzole seien 4- und 5-Chlor-2 -aminobenzoesäure, 4- und 5-Nitro-2-aminobenzoesäure und Anthranilsäuresulfonsäureamide wie das 2-Aminobenzol-1 -carbonsäure-4- oder -5-sulfonsäureamid erwähnt.

Als Beispiele für die durch D-$NH_2$ wiedergegebenen Amine seien folgende genannt; wobei $Z_1$ für einen faserreaktiven Rest steht:

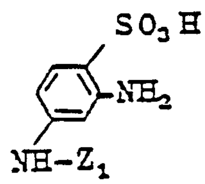

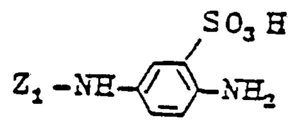

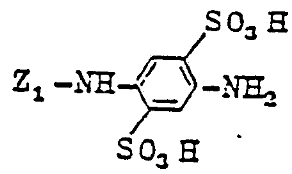

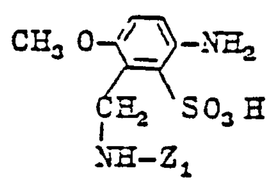

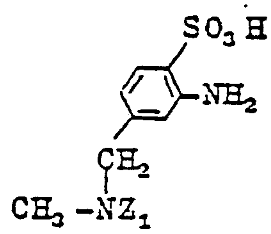

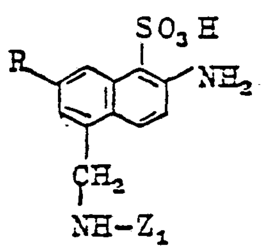

wobei R = H oder $SO_3H$

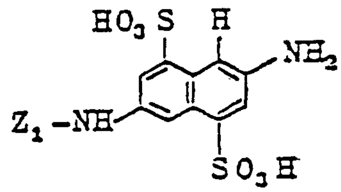

Die neuen Farbstoffe der Formel (1) mit $Z_1$ = faserreaktiver Rest eignen sich zum Färben und Bedrucken von Hydroxyl- oder Amidgruppen enthaltenden Materalien, wie Textilfasern-, Fäden und Geweben aus Wolle,

Seide, synthetischen Polyamid-, und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln der Farbstoffe sind die der entsprechenden freien Säuren. Die Farbstoffe wurden im allgemeinen in Form der Alkalisalze eingesetzt.

Die in den Beispielen genannten Gewichte beziehen sich auf die freie Säure.

**Beispiel 1**

72,4 g des Farbstoffs der Formel

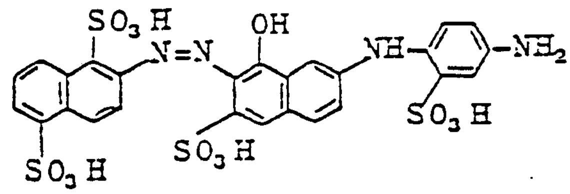

werden in 1 l Wasser gelöst. Bei 15-20°C tropft man 16,9 g 2,4,6-Trifluor-5-chlor-pyrimidin ein und hält durch gleichzeitige Zugabe von verdünnter Natronlauge einen pH von 6-6,5 ein. Nach beendeter Acylierung wird der Farbstoff mit 5 Vol-% Kochsalz abgeschieden, abgesaugt, getrocknet und gemahlen. Es resultiert ein dunkelbraunes Farbstoffpulver, das sich leicht mit brauner Farbe in Wasser löst. In Form der freien Säure entspricht der Farbstoff der Formel

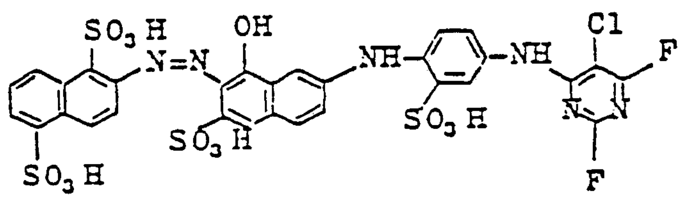

Nach einem der für Reaktivfarbstoffe üblichen Verfahren erhält man damit auf Baumwolle kräftige dunkelbraune Färbungen (hue number 32).

Der Ausgangsfarbstoff wird erhalten durch Kupplung von diazotierter 2-Aminonaphthalin-1,5-disulfonsäure auf 1-Hydroxy-7-(2'-sulfo-4'-nitrophenylamino)-naphthalin-3-sulfonsäure im neutralen bis schwach alkalischen Medium und anschlie*Bende Reduktion der Nitro- zur Aminogruppe mit $Na_2S$.

Verwendet man anstelle von 2,4,6-Trifluor-5-chlor-pyrimi-din eine äquivalente Menge der nachfolgend aufgeführten Reaktivkomponenten, so erhält man gleichfalls wertvolle Reaktivfarbstoffe, die Baumwolle dunkelbraun färben. Der Farbe nach Colour-Index-Hue Indication Chart beträgt Hue Nr. 32.

**Tabelle 1**

**Reaktivkomponente**

2,4-Difluor-5-chlor-6-methyl-pyrimidin
5-Chlor-2,4,6-trifluorisophthalonitril
2,4,6-Trifluor-1,3,5-tricyanobenzol
2,4,5,6-Tetrafluorisophthalonitril
2,4,6-Trichlor-5-methylsulfonyl-pyrimidin
2,4,6-Trichlor-5-ethylsulfonyl-pyrimidin
2,4-Difluor-5-methylsulfonyl-6-(2'-sulfo-phenyl-amino)-pyrimidin
2,4,5,6-Tetrachlor-pyrimidin
2-Methylsulfonyl-4,5-dichlor-6-methyl-pyrimidin
2-Amino-4,6-difluor-triazin
2-Methylamino-4,6-difluortriazin
2-Phenylamino-4,6-difluortriazin

2-(2'-Sulfophenylamino)-4,6-difluor-triazin
2-(3'-Sulfophenylamino)-4,6-difluor-triazin
2-(4'-Sulfophenylamino)-4,6-difluor-triazin
2-(2'-Methyl-5'-sulfophenyl-amino)-4,6-difluortriazin
2-(2'-Chlor-4'-sulfophenyl)-amino-4,6-difluortriazin
2-(6'-Sulfonaphthyl-2'-amino)-4,6-difluortriazin
2-Methoxyethoxy-4,6-difluor-triazin
2-Amino-4,6-dichlor-triazin
2-Methylamino-4,6-dichlor-triazin
2-Phenylamino-4,6-dichlor-triazin
2-(3'-Sulfophenylamino)-4,6-dichlortriazin
2-(4'-Sulfophenylamino)-4,6-dichlortriazin
2-(2'-Methyl-5'-sulfophenylamino)-4,6-dichlor-triazin
2-N-Methylphenylamino-4,6-dichlortriazin
2,3-Dichlorchinoxalin-6-carbonsäurechlorid
2,4,6-Trifluor-5-pyrimidin
2,4-Difluor-5,6-dichlor-pyrimidin.

Wenn man nach den Angaben des Beispiels 1 verfährt, jedoch anstelle der dort verwendeten Aminoazofarbstoffe diejenigen einsetzt, die man durch Kupplung der diazotierten Amine, die in Spalte 1 genannt sind, mit den in Spalte 2 aufgeführten Verbindungen im neutralen bis schwach alkalischen Bereich und anschließende $Na_2S$-Reduktion der Nitrogruppe erhält, und als Reaktivkomponente die in Tabelle 1 und im Beispiel 1 genannten Verbindungen verwendet, so resultieren gleichfalls wertvolle Reaktivfarbstoffe, die Baumwolle in den in Spalte 3 genannten Tönen färben. Angegeben wird hierbei und in den Beispielen jeweils die Farbtonangabe nach Colour Index Hue Indication Chart (Hue number).

Tabelle 2

| Amine | Kupplungskomponente | Farbton | (hue number) |
|---|---|---|---|
| o-Sulfanilsäure | 1-Hydroxy-7-(2'-sulfo-4'-nitrophenylamino)-naphthalin-3-sulfonsäure (reduziert) | braun | 32 |
| Anilin | " | rotstichig braun | 26 |
| Anilin-2,5-disulfonsäure | " | braun | 32 |
| 1-Amino-4-methoxy-benzol-2,5-disulfonsäure | " | rotstichig braun | 26 |
| 1-Amino-4-methoxy-benzol-2-sulfonsäure | " | rotstichig braun | 26 |
| 2-Amino-naphthalin-1-sulfonsäure | " | rotstichig braun | 26 |
| 2-Amino-naphthalin-3,6,8-trisulfonsäure | " | rotstichig braun | 26 |

**Beispiel 2**

Die aus 30,3 g 2-Amino-naphthalin-1,5-disulfonsäure bereitete Diazoverbindung wird zu einer Anschlämmung von 55,9 g 1-Hydroxy-7-(2'-sulfo-4'-(2'',4''-difluor-5''-chlorpyrimidinyl -6''-amino)-phenylamino)-naphthalin-3-sulfonsäure in 500 ml Wasser und 28 g Natriumhydrogencarbonat gegeben. Nach beendeter Kupplung wird der Farbstoff ausgesalzen. Nach dem Absaugen, Trocknen und Mahlen erhält man ein dunkelbraunes Farbstoffpulver. Der Farbstoff ist identisch mit dem Farbstoff des Beispiels 1.

**Beispiel 3**

239 g 1-Hydroxy-7-amino-naphthalin-3-sulfonsäure werden in 0,5 l Wasser mit 60 ml conc. Natronlauge auf pH 6 gestellt. Man gibt dann 259,1 g 2-Fluor-5-nitro -benzolsulfonsaures Kalium zu, wärmt auf 100° C und tropft 15 %ige Sodalösung in dem Maße ein, daß der pH zwischen 5,5 und 6,5 liegt. Nach beendeter Kondensation wird die stark gelbgefärbte Lösung mit dem gleichen Volumen einer gesättigten Natriumchlorid-Lösung versetzt. Nach dem Abkühlen saugt man ab. Die Verbindung der Formel

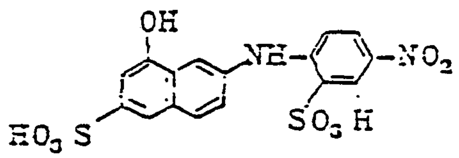

(liegt als neutrales Alkalisalz vor) löst sich leicht in Wasser mit gelber Farbe. Der Kupplungswert (Kupplung mit diazotischem Anilin im sodaalkalischen Medium) ergibt eine Ausbeute von 95 %. Die Elementaranalyse führt zu einem Atomverhältnis von C:N:S wie 8:1:1 (Theorie 8:1:1).

$R_f$-Wert: 0,36

Laufmittel: Dimethylformamid/Diethylamin/5n Ammoniak/Methylethylketon im Volumenverhältnis 75/120/120/600 DC-Platte: Aluminium-Folie, Kieselgel 60 F 254 (Merck) max: außerhalb des sichtbaren Bereiches.

**Beispiel 4**

In 250 ml Monohydrat (= 100 %ige Schwefelsäure) trägt man 423 g 4-Fluor-nitrobenzol ein und tropft dann 250 ml 65 %iges Oleum ein. Man erwärmt dann im Laufe von 2 Stunden auf 100° C und hält solange diese Temperatur, bis eine mit Wasser versetzte Probe keine öligen Tropfen des Ausgangsmaterials mehr ausscheidet. Nach dem Abkühlen trägt man die Sulfierungsschmelze auf soviel Eis aus, daß die Temperatur nicht über 20° C steigt. Zu Abscheidung des Reaktionsproduktes setzt man 15 Volumenprozent Kaliumchlorid zu und saugt nach einstündigem Rühren ab. Der farblose Niederschlag wird erneut in 1 l Wasser angerührt und mit Kalilauge neutralisiert. Nach dem Absaugen erhält man 950 g wasserfeuchte Paste. Die Bestimmung der Ausbeute durch Zinkstaubreduktion der Nitrogruppe ergibt 84 %.

Die Struktur des 2-Fluor-5-nitro-benzolsulfonsauren Kaliums wird durch das IH-NMR-Spektrum ($[D_6]$-DMSO; 80MHz) belegt.

Das Proton an C-3 absorbiert als Triplett bei 7.50 ppm, wobei die H,H-ortho- und die F,H-ortho-Kopplungskonstanten mit J = 9,0 Hz gleich groß sind. Das Proton an C-4 absorbiert mit 8 Linien (d/d/d) um 8,32 ppm, dasjenige an C-6 mit 4 Linien (d/d) bei 8,55 ppm.

**Patentansprüche**

1. Farbstoffe der Formel

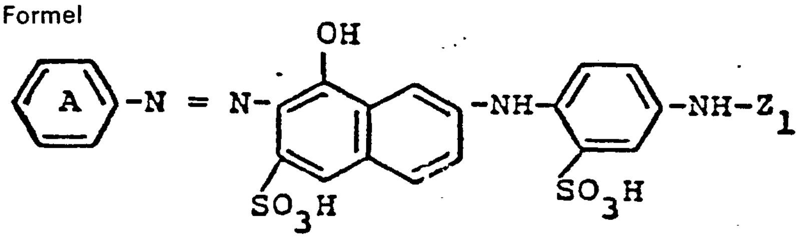

und

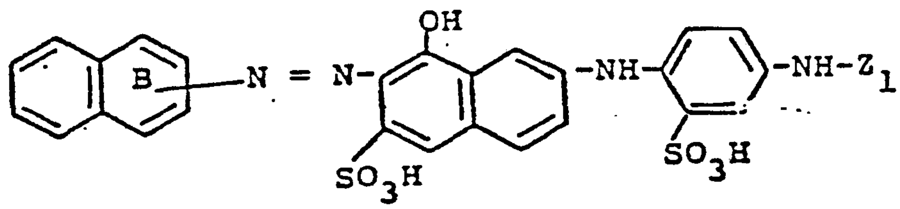

worin

$Z_1$ = faserreaktiver Rest und Benzolring A und der Naphthalinring B noch durch $C_1$-$C_4$-Alkyl, $C_1$-$C_4$-Alkoxy, Nitro, Carboxy, Sulfo, $-SO_2CH=CH_2$, $-SO_2CH_2CH_2-OSO_3H$, Cl und N-Z

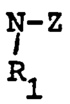

substituiert

sein kann, wobei Z ein faserreaktiver Rest oder ein nicht-faserreaktiver Carbonyl- oder Sulfonyl rest ist und $R_1$ = H oder $C_1$-$C_4$-Alkyl.

2. Farbstoffe des Anspruchs 1, worin $Z_1$ = Rest einer Reaktivkomponente der Fluorpyrimidin-, Monofluor- oder Monochlortriazinreihe oder der Dichlor-1,3,5-triazinylrest ist.

3. Farbstoffe der Ansprüche 1 und 2, die in den Ringen A bzw. B Sulfogruppen enthalten.

4. Verwendung der Farbstoffe der Ansprüche 1 - 3 zum Färben und Bedrucken von Hydroxylgruppen- oder Amidgruppen-haltigen Materialien.

**Claims**

1. Dyestuffs of the formula

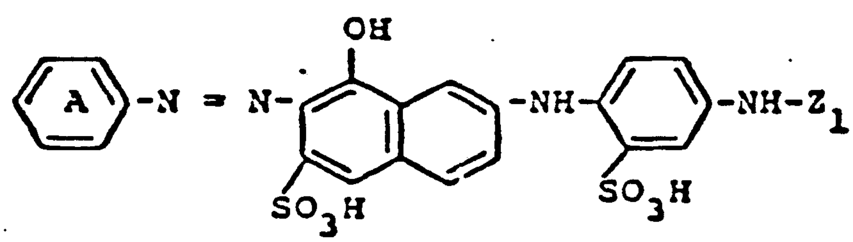

and

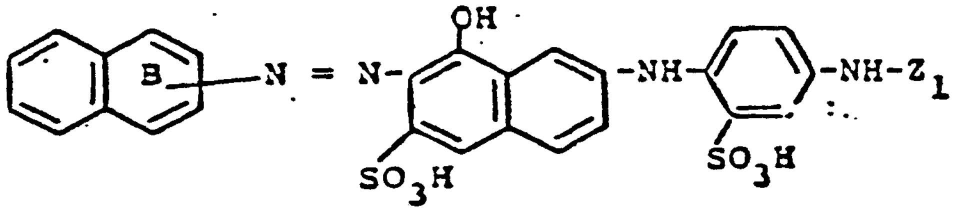

wherein

$Z_1$ = a fibre-reactive radical and benzene ring A and the naphthalene ring B may also be substituted by $C_1$-$C_4$-alkyl, $C_1$-$C_4$-alkoxy, nitro, carboxyl, sulpho, $-SO_2CH=CH_2$, $-SO_2CH,CH_2-OSO_3H$, Cl and

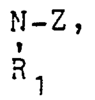

wherein Z is a fibre-reactive radical or a non-fibre-reactive carbonyl or sulphonyl radical and $R_1$ = H or $C_1$-$C_4$-alkyl.

2. Dyestuffs of Claim 1, wherein

$Z_1$ is the radical of a reactive component of the fluoropyrimidine, monofluorotriazine or monochlorotriazine series or the dichloro-1,3,5-triazinyl radical.

3. Dyestuffs of Claims - and 2 which contain sulpho groups in the rings A or B.

4. Use of the dyestuffs of Claims 1 - 3 for dyeing and printing hydroxyl-group- or amide-group-containing materials.

**Revendications**

1. Colorants de formules

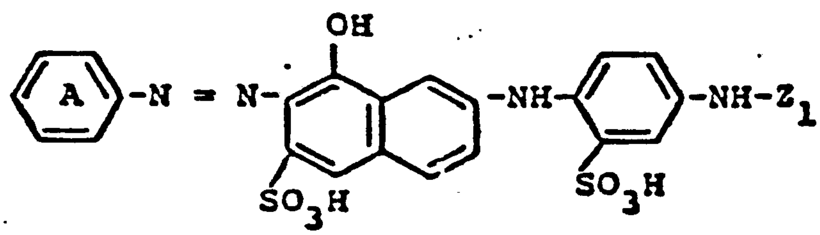

et

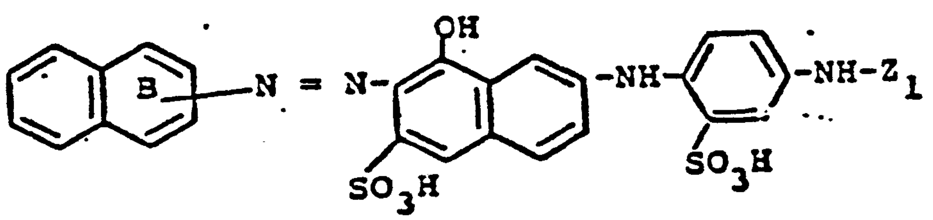

dans lesquelles

$Z_1$ est un reste réactif envers la fibre et de noyau benzénique A et le noyau naphtalénique B peuvent encore être substitués par un substituant alkyle en $C_1$ à $C_4$, alkoxy en $C_1$ à $C_4$, nitro, carboxy, sulfo, $-SO_2CH=CH_2$, $-SO_2CH_2CH_2-OSO_3H$, Cl et

N -Z,
'
$R_1$

Z étant un reste réactif envers la fibre ou un reste carbonyle ou sulfonyle non réactif envers da fibre et $R_1$ représentant H ou un groupe alkyle en $C_1$ à $C_4$.

2. Colorants suivant la revendication 1, dans lesquels

$Z_1$ est un reste d'un composant réactif de la série fluoropyrimidine, monofluoro- ou monochlorotriazine ou le reste dichloro-1,3,5-triazinyle.

3. Colorants suivant les revendications 1 et 2, qui contiennent dans les noyaux A et B des groupes sulfo.

4. Utilisation des colorants suivant les revendications 1 à 3 pour la teinture et l'impression de matières portant des groupes hydroxyle ou des groupes amido.